# EUROPÄISCHE PATENTSCHRIFT

(11) **EP 3 461 666 B1**
(45) Veröffentlichungstag und Bekanntmachung des Hinweises auf die Patenterteilung: **11.03.2020**
(21) Anmeldenummer: 18192851.6
(22) Anmeldetag: 06.09.2018
(51) Int. Cl.: B60H 1/34

(54) **LAGEREINRICHTUNG MIT EINEM BEDIENRAD UND LUFTAUSSTRÖMER MIT SOLCHER LAGEREINRICHTUNG**
BEARING DEVICE WITH AN OPERATING WHEEL AND AIR VENT WITH SAID BEARING DEVICE
DISPOSITIF DE PALIER DOTÉ D'UNE ROUE DE COMMANDE ET AÉRATEUR COMPORTANT UN TEL DISPOSITIF DE PALIER

(30) Priorität: 11.09.2017 DE 102017120937
(43) Veröffentlichungstag der Anmeldung: 03.04.2019
(73) Patentinhaber: Dr. Schneider Kunststoffwerke GmbH, 96317 Kronach-Neuses (DE)
(72) Erfinder: Hoehn, Pascal, 96450 Coburg (DE); Kamm, Daniel, 96264 Altenkunstadt (DE)

(56) Entgegenhaltungen:
- EP-A1- 1 033 269
- GB-A- 2 232 238
- JP-A- H07 149 140
- US-A1- 2015 031 278

## Beschreibung

Es werden eine Lagereinrichtung mit einem Bedienrad, die beispielsweise für einen Luftausströmer verwendet werden kann, und einen Luftausströmer mit einer Lagereinrichtung beschrieben. Über die Lagereinrichtung kann ein Bedienrad mit einer definierten Kraft zur Erzeugung einer Bedienkraft gehalten werden. Zudem wird über die Lagereinrichtung sichergestellt, dass es zu keinem Verkippen des Bedienrads und nicht zu ungleichmäßigen Spaltbildern kommt.

Bedienräder werden beispielsweise bei Luftausströmern dazu eingesetzt, um die Menge an dem Luftausströmer zugeführter und vom Luftausströmer abgegebener Luft zu regeln. Die Bedienräder sind hierzu beispielsweise mit einer Hebelanordnung und mit einer Schließeinrichtung gekoppelt. Die Schließeinrichtung kann beispielsweise eine Schließklappe aufweisen. Die Bedienräder können aber auch zur Steuerung der Ausrichtung von Luftleitelementen vorgesehen sein. Darüber hinaus können Bedienräder auch zur Regelung weiterer Einrichtungen vorgesehen sein.

### Stand der Technik

Herkömmliche Bedienräder werden im Stand der Technik ausschließlich an einem Gehäuse gelagert, was beim Bedienradaustritt an einer am Gehäuse angeordneten Blende zu großen Toleranzen führt. Dementsprechend muss umlaufend am Bedienradaustritt an der Blende ein ausreichend großer Spalt gewählt werden, der ebenfalls unsymmetrisch ausfallen kann. Durch die Lagerung des Bedienrads am Gehäuse befinden sich an dieser Lagerstelle alle für die Position und Ausrichtung notwendigen Geometrien. Auch ein krafterzeugendes Element in Form einer Metall- oder Kunststofffeder wird am Gehäuse angebracht. Die Bedienkraftvorgaben können hierbei oftmals nur nach mehrmaligen Werkzeugänderungen erreicht werden, bis das in einem Spritzgussprozess hergestellte Gehäuse entsprechend ausgebildet ist.

Im Stand der Technik wird ein Bedienrad über einen Zapfen am Gehäuse gelagert, wodurch das Bedienrad in nur zwei Richtungen bestimmt ist. Für die Bestimmung in der zusätzlichen Raumrichtung direkt am Lagerzapfen ist nach dem Stand der Technik zum Gehäuse hin eine Fläche notwendig und in der Gegenrichtung ein flexibles Element, welches einen nach außen hin teilweise freigestellten Zapfenbereich aufweist, der bei der Montage des Bedienrads nach Innen federn kann. Dies hat jedoch zur Folge, dass bei zu kleinem Abstand zwischen der Rastfläche des federnden Zapfenbereichs und der Fläche kein Einrasten gewährleistet ist. Bei ausreichendem Abstand zwischen der Fläche und der Rastfläche des federnden Zapfenbereichs kann es zu einem Klappern und zu haptischen Einschränkungen kommen. Durch die multifunktionelle Ausführung des Zapfens ist dieser eine funktionell und werkzeugtechnisch schwer kontrollierbare Schnittstelle. Die Bedienkrafterzeugung gemäß dem Stand der Technik am Zapfen hat zudem bezüglich des Drehmoments ein ungünstiges Hebelverhältnis sowie einen geringeren verfügbaren Bauraum.

Die Lagereinrichtungen für Bedienräder gemäß dem Stand der Technik weisen einen großen Spalt zwischen dem Bedienrad und einem Bedienradaustritt an einer Blende auf. Zudem ergeben sich ungleichmäßige Spaltverläufe zwischen dem Bedienrad und dem Bedienradaustritt an der Blende sowie eine toleranzanfällige Krafterzeugung, da ein ungünstiges Hebelverhältnis von der Position der Krafterzeugung zum Angriffspunkt am Bedienrad vorliegt. Die Ausführungen des Standes der Technik haben daher unvorhersehbare Auswirkungen bezüglich des Spaltbilds und der Bedienkraft.

Aus dem Stand der Technik ist es aus DE 20 2015 103 999 U1 bekannt, Bedienräder auf Lagerbuchsen drehbar zu lagern. DE 20 2005 008 666 U1 offenbart eine Vorrichtung zur Betätigung von Baugruppen mit einem Walzenkörper, wobei das Bedienrad in definierten Positionen lagefixiert angeordnet und in einer rechtwinklig zur Längsachse des Walzenkörpers verlaufenden Ebene sowie gegen die Kraft von Federelementen derart verlagerbar ist, dass infolge einer Kraftbeaufschlagung des Bedienrades eine kraft- und/oder formschlüssige Verbindung zwischen Bedienrad und Walzenkörper herstellbar ist, in deren Folge der Walzenkörper verdreht wird und wobei mit nachlassender Kraftbeaufschlagung die kraft- und/oder formschlüssige Verbindung wieder getrennt wird.

Um diesem Problem entgegenzutreten offenbart DE 10 2009 051 297 A1 eine Lagerung eines drehbaren Bedienelements an einem Luftausströmer. Darin ist angegeben, dass drehbare Bedienelemente Fertigungstoleranzen unterliegen, wobei die Fertigungstoleranzen zu einem ungleichmäßigen Fugenbild und einer Funktionsbeeinträchtigung führen können, insbesondere der Beweglichkeit des Bedienrads. Toleranzabweichungen zwischen den Bauteilen eines Luftausströmers sind dadurch ausgeglichen und eine exakte Positionierung des Bedienrads in einer Blendenöffnung in Richtung zum Gehäuse eines Luftausströmers wird dadurch erreicht, dass das an einem Luftausströmer angeordnete und an einer Öffnung in einer an diesem angeordneten Blende vorstehende und drehbare Bedienelement für die Verstellung eines Lamellenpakets oder einer Luftregulierungsklappe über ein Kugelgelenk am Gehäuse des Luftausströmers angelenkt ist.

Das Kugelgelenk stellt damit den Toleranzausgleich bereit und soll ein Fugenbild verbessern.

Die Kopplung des Bedienrads über ein Kugelgelenk bietet jedoch keine Möglichkeit ein Kippen des Bedienrads zu verhindern. Die in DE 10 2009 051 297 A1 beschriebene Vorrichtung löst daher die ihr gestellte Aufgabe nur unzureichend.

Aus dem Stand der Technik ist aus GB 2 232 238 A ein Luftausströmer bekannt, der ein Bedienrad aufweist, das drehbar an einem Lagerabschnitt des Luftausströmergehäuses angeordnet ist, wobei das Bedienrad über einen Lagerteller und eine Schraube mit dem Lagerabschnitt verbunden ist. Das Bedienrad ist auf dem Lagerteller drehbar gelagert.

JP H07 149140 A offenbart einen Luftausströmer mit einem Bedienrad, das über ein Rastmittel mit einem Lagerabschnitt des Luftausströmergehäuses verbunden ist.

EP 1 033 269 A1 offenbart einen Luftausströmer mit einem Lagerzapfen an einer Gehäusewand des Luftausströmers, auf dem ein Bedienrad drehbar gelagert ist.

US 2015/031278 A1 offenbart einen Luftausströmer mit einem drehbar gelagerten Bedienrad, das über einen Lagerzapfen drehbar gelagert ist und sich einseitig an einem Anschlag abstützt.

### Aufgabe

Gegenüber dem bekannten Stand der Technik besteht die Aufgabe der Erfindung darin, den Spalt zwischen einem Bedienrad und einer Blendenöffnung zu reduzieren, ein symmetrisches Spaltbild bereitzustellen sowie eine Spielfreiheit des Bedienrads anzugeben. Zudem soll eine einfach einstellbare Bedienkraft erreicht werden. Darüber hinaus sollen die hierfür erforderlichen Funktionsflächen eindeutig definiert sein.

### Lösung

Die vorstehend genannte Aufgabe wird erfindungsgemäβ durch eine Lagereinrichtung mit einem Bedienrad gelöst, aufweisend einen Wandabschnitt mit einem Lagerzapfen, eine Blende, die an dem Wandabschnitt angeordnet ist, und ein Bedienrad, welches über den Lagerzapfen drehbar gelagert ist und abschnittsweise über eine Öffnung in der Blende herausragt, wobei
- der Wandabschnitt ein Lager aufweist, welches beabstandet zum Lagerzapfen, der Blende abgewandt, angeordnet ist,
- das Lager einer Verlagerung des Bedienrads parallel zur Rotationsachse des Bedienrads in mindestens einer Richtung entgegenwirkt, und
- an der Blende eine Federeinrichtung angeordnet ist, welche das Bedienrad gegen einen Anlagebereich der Blende drückt.

Das Bedienrad ist über den Lagerzapfen drehbar gelagert, wobei ein leichtes Kippen möglich ist. Diesem Kippen wirkt das Lager entgegen, welches beabstandet zum Lagerzapfen angeordnet ist. Zusätzlich wird mittels der Federeinrichtung das Bedienrad auf der im Wesentlichen gegenüberliegenden Seite zum Lager über die Feder gegen den Anlagebereich der Blende gedrückt. Die Federeinrichtung wirkt daher nicht im Bereich des Lagerzapfens auf das Bedienrad, sondern beabstandet zur Lagerstelle. Hierüber wird in Kombination mit dem Lager im gegenüberliegenden Bereich des Bedienrads ein Verkippen des Bedienrads verhindert. Die Feder wirkt ebenfalls einem Verkippen des Bedienrads entgegen. Über die Feder wird insbesondere das Bedienrad gegen den Anlagebereich gedrückt, wodurch die Bedienkraft einstellbar ist. Die Feder kann hierzu entsprechend ausgebildet sein. Um verschiedene Bedienkräfte realisieren zu können, kann beispielsweise die Feder auch ausgetauscht werden.

Wesentlicher Vorteil der Lagereinrichtung ist die Verlagerung der Lagerstellen an die Blende und abseits der Rotationsachse des Bedienrads. Hierdurch kann sichergestellt werden, dass definierte Spaltabstände zwischen dem Bedienrad und einer Austrittsöffnung der Blende erreicht werden. Unsymmetrische Spaltbilder werden hierdurch verhindert. Zudem wird über die Feder sichergestellt, dass das Bedienrad ohne Spiel an der Lagerstelle aufgenommen ist.

Bei einer vorteilhaften Ausgestaltung der Erfindung kann der Anlagebereich zwei von der Blende abstehende Haltearme aufweisen, die sich ausgehend von der Öffnung der Blende in Richtung des Bedienrads erstrecken, und Anlageflächen für das Bedienrad aufweisen, wobei die Haltearme sich auf der dem Wandabschnitt zugewandten Seite der Blende befinden.

Bei einer vorteilhaften Ausgestaltung der Erfindung können auf der gegenüberliegenden Seite der Öffnung der Blende zwei weitere Haltearme angeordnet sein, welche Anlageflächen für das Bedienrad aufweisen, wobei das Bedienrad zwischen den Haltearmen und den Paaren von Haltearmen aufgenommen ist.

Die Haltearme an der dem Wandabschnitt zugewandten Seite der Blende dienen in erster Linie als Anlagefläche für das Bedienrad, wobei über die Feder das Bedienrad gegen diese Haltearme gedrückt wird. Die Haltearme auf der gegenüberliegenden Seite können als Überlastschutz dienen.

Bei einer vorteilhaften Ausgestaltung der Erfindung kann das Bedienrad mindestens ein Gleitringelement aufweisen, welches sich abschnittsweise radial zur Rotationsachse des Bedienrads um das Bedienrad erstreckt und im Bereich der Anlageflächen der Haltearme angeordnet ist. Über das Gleitringelement kann die Anlage des Bedienrads an den Haltearmen erfolgen.

Bei einer vorteilhaften Ausgestaltung der Erfindung kann das mindestens eine Gleitringelement eine reibungsreduzierende oder reibungserhöhende Beschichtung aufweisen. In Abhängigkeit der verwendeten Materialien und der Ausbildung sowie der gewünschten Bedienkräfte kann über eine reibungsreduzierende oder eine reibungserhöhende Beschichtung das Gleiten der Gleitringelemente an den Anlageflächen der Halteelemente definiert werden. Zudem kann eine Beschädigung der Halteelemente oder der Gleitringelemente über eine entsprechende Beschichtung verhindert werden.

Bei einer vorteilhaften Ausgestaltung der Erfindung kann die Federeinrichtung derart ausgebildet und angeordnet sein, dass diese beabstandet zum Lagerzapfen einen Druck auf das Bedienrad ausübt. Die Position der Federeinrichtung ist maßgeblich für die Bedienkraft und die sichere Lagerung in der Raumrichtung der Rotationsachse. Vorzugsweise übt die Federeinrichtung einen Druck am äußeren Bereich des Bedienrads auf dieses aus. Durch die Verlagerung der Kraft- bzw. Moment-Erzeugung in die Blende kann eine Feder der Federeinrichtung weicher und geometrisch großzügiger ausgeführt werden.

Bei einer vorteilhaften Ausgestaltung der Erfindung kann das Bedienrad eine Lageröffnung aufweisen, über welche das Bedienrad auf dem Lagerzapfen drehbar gelagert ist, wobei die Lageröffnung an der Innenwand vier um 90° versetzt angeordnete Lagerflächen aufweist.

Bei einer vorteilhaften Ausgestaltung der Erfindung kann das Bedienrad Endanschläge zur Begrenzung der Rotation des Bedienrads und der Wandabschnitt kann Anschlagflächen für die Endanschläge aufweisen. Bei einer weiteren Ausgestaltung der Erfindung kann ein Endanschlag federnd ausgeführt sein, wodurch eine leichte Montage ermöglicht wird.

Die Aufgabe wird auch durch einen Luftausströmer mit einer Lagereinrichtung gemäß einer der vorstehend beschriebenen Ausgestaltungen gelöst, wobei der Wandabschnitt Teil des Gehäuses des Luftausströmers und das Bedienrad über eine Hebel- oder Zahnradanordnung mit einer Schließklappeneinrichtung zur Regelung der zugeführten Luftmenge gekoppelt ist.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen. Kurzbeschreibung der Figuren

In den Zeichnungen zeigt:
- Fig. 1: eine perspektivische Darstellung eines Luftausströmergehäuses mit einer Lagereinrichtung;
- Fig. 2: eine perspektivische Darstellung einer Seitenwand des Gehäuses mit Lagerelementen für ein Bedienrad;
- Fig. 3: eine schematische Draufsicht auf die Seitenwand;
- Fig. 4: eine schematische Seitenansicht des Bedienrads;
- Fig. 5: eine weitere schematische Seitenansicht des Bedienrads;
- Fig. 6: eine perspektivische Darstellung des Bedienrads;
- Fig. 7: eine vergrößerte perspektivische Darstellung der Lageröffnung des Bedienrads;
- Fig. 8: eine perspektivische Darstellung der Blende der Lagereinrichtung mit eingesetzter Feder;
- Fig. 9: eine schematische Draufsicht auf die Seitenwand und die Blende;
- Fig. 10: eine schematische Draufsicht auf die Seitenwand, die Blende und das Bedienrad;
- Fig. 11: eine schematische Draufsicht auf die Seitenwand, das Bedienrad und die Feder;
- Fig. 12: eine schematische Schnittansicht durch die Lagerstelle an der Seitenwand und das Bedienrad;
- Fig. 13: eine schematische Seitenansicht des Luftausströmergehäuses und der Lagereinrichtung; und
- Fig. 14: eine schematische Darstellung eines Bereichs der Blende und des Bedienrads.

In den Zeichnungen mit gleichen Bezugszeichen versehene Komponenten entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind.

### Ausführliche Beschreibung eines Ausführungsbeispiels

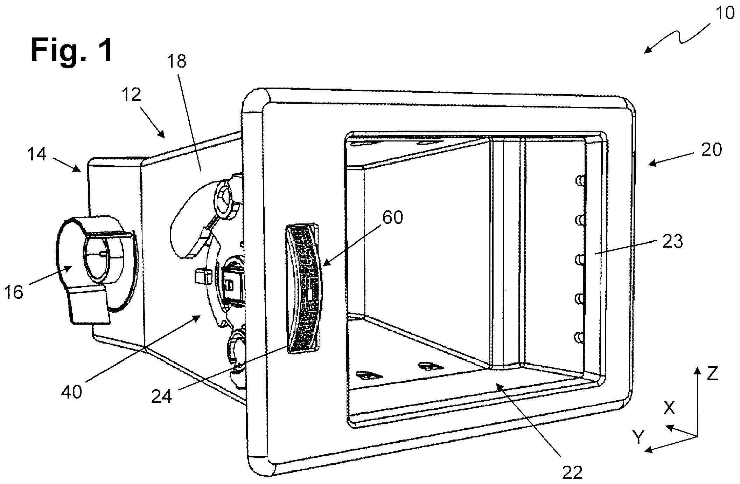

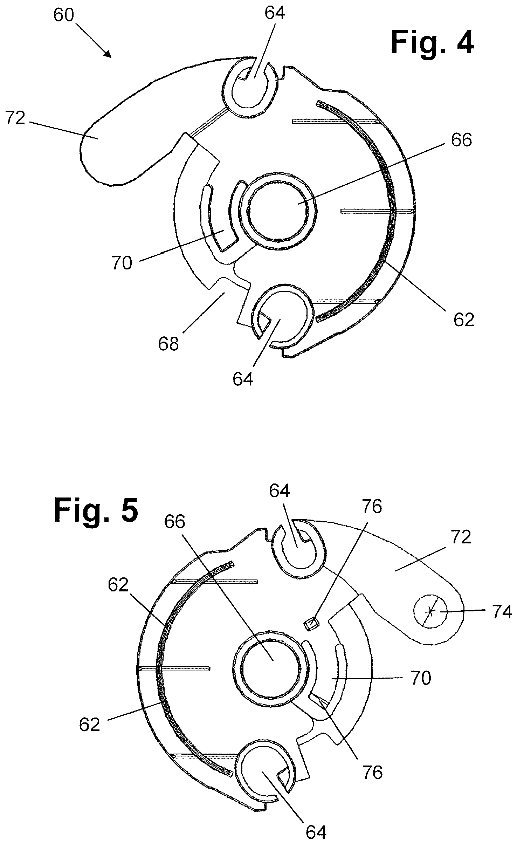

Fig. 1 zeigt eine perspektivische Darstellung eines Luftausströmers 10, insbesondere eines Gehäuses 12 des Luftausströmers 10 mit einer Lagereinrichtung 40. Das Gehäuse 12 weist einen Anschluss 14 auf, über den das Gehäuse 12 an einen Luftzufuhrkanal angeschlossen ist. Der Luftzuführkanal ist mit einer Klimaanlage gekoppelt. Das Gehäuse 12 weist gegenüberliegende Seitenwände auf, wobei an der Seitenwand 18 die Lagereinrichtung 40 angeordnet ist. Zudem weist das Gehäuse 12 ein Lager 16 auf, über welches eine Schließklappe (in den Figuren nicht dargestellt) verschwenkbar gelagert ist. Die Lagerwelle der Schließklappe ragt aus einer Öffnung des Lagers 16 heraus und ist über eine in den Figuren nicht dargestellte Hebelanordnung mit einer Lagerkugel 74 (siehe hierzu beispielsweise Fig. 5) mit einem Bedienrad 60 gekoppelt. Das Bedienrad 60 ist drehbar an einem Lagerzapfen 42 gelagert. Der Lagerzapfen 42 ist mit der Seitenwand 18 verbunden.

Im Bereich einer Luftaustrittsöffnung ist an dem Gehäuse 12 eine Blende 20 angeordnet. Die Blende 20 weist eine Ausströmöffnung 22 auf. Über die Ausströmöffnung 22 wird über die Klimaanlage zugeführte Frischluft oder klimatisierte Luft ausgegeben. Ein Rahmen 23 umgibt die Ausströmöffnung 22.

Der Luftausströmer 10 weist zusätzlich zu der Schließklappe eine erste Gruppe von Lamellen und eine zweite Gruppe von Lamellen auf, wobei die Lamellen der ersten Gruppe und der zweiten Gruppe orthogonal zueinander verschwenkbar im Gehäuse 12 gelagert sind. Hierfür ist eine gesonderte Bedieneinrichtung vorgesehen. Beispielsweise können die Lamellen über ein an einer Steuerlamelle verschiebbar gelagertes Bedienelement in Ihrer Ausrichtung verändert werden.

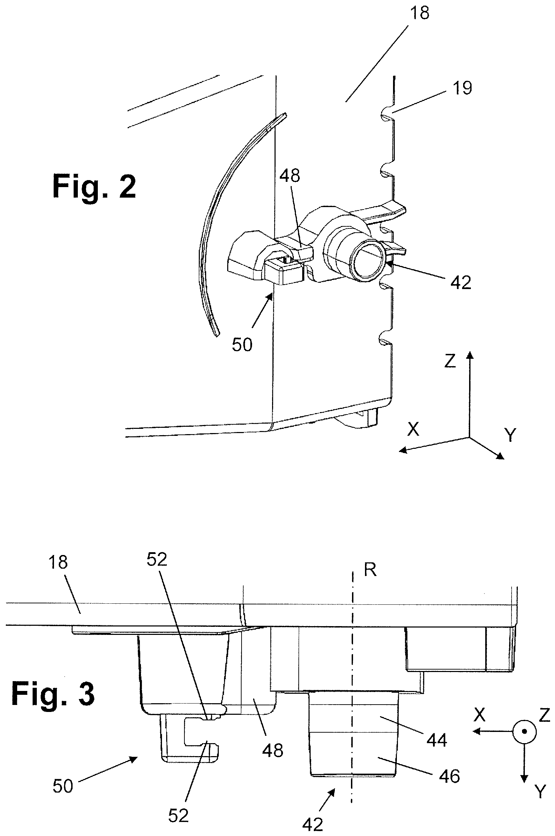

Fig. 2 zeigt eine perspektivische Darstellung der Seitenwand 18 des Gehäuses 12 mit Lagerelementen für ein Bedienrad 60. Die Lagerelemente der Lagereinrichtung 40 umfassen sowohl den Lagerzapfen 42 als auch ein Lager 50. Das Lager 50 dient zur Begrenzung einer Kippbewegung des Bedienrads in Y-Richtung.

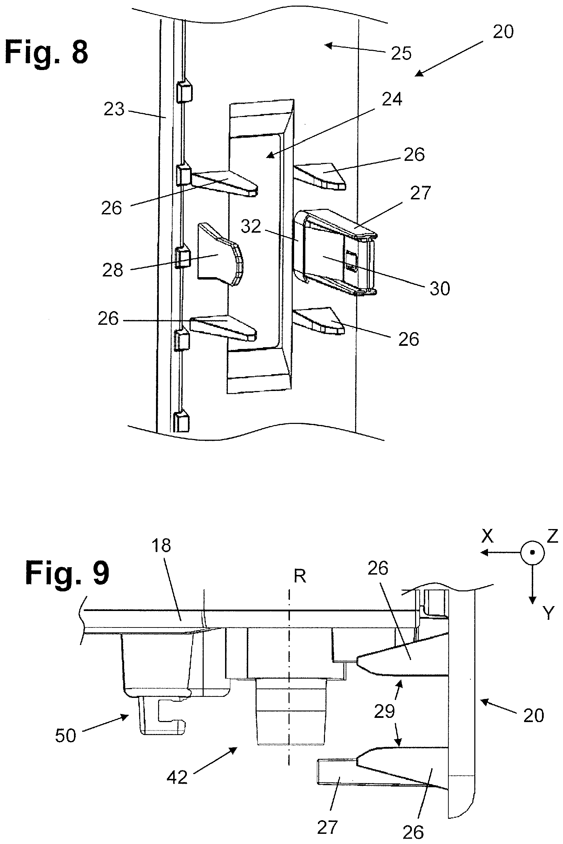

Die Seitenwand 18 weist Lageröffnungen 19 auf, über welche die erste Gruppe von verschwenkbar gelagerten Lamellen mit ihren Lagerzapfen aufgenommen ist. Die nicht weiter bezeichnete Aufnahme im Bereich der Lageröffnungen 19, welche sich an den Lagerzapfen 42 anschließt dient zur Aufnahme einer Befestigungszunge 28 (siehe Fig. 8).

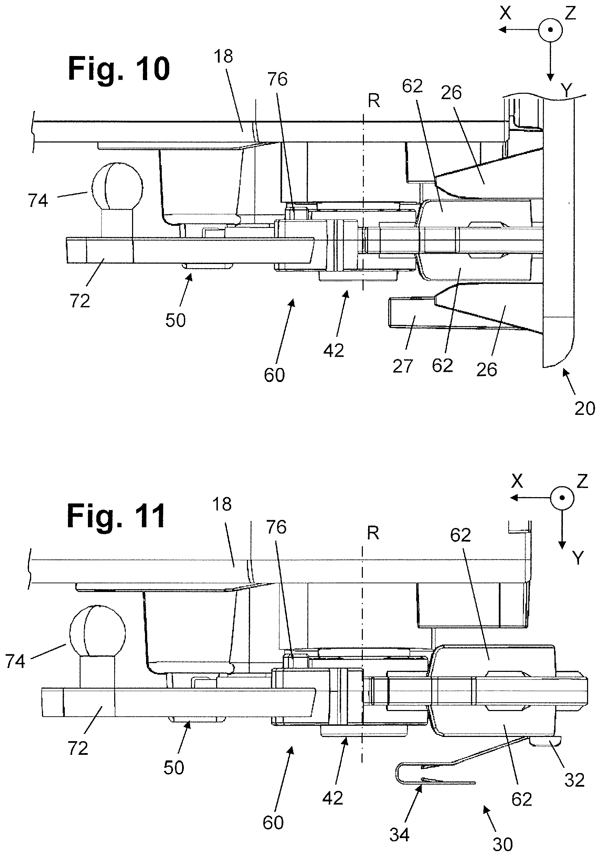

Fig. 3 zeigt eine schematische Draufsicht auf die Seitenwand 18. Das Lager 50 weist zwei gegenüberliegende Anlageflächen 52 auf. Zwischen diesen Anlageflächen wird das Bedienrad 60 gehalten, wodurch eine Verlagerung in Y-Richtung verhindert wird. Über die Anschlagfläche 48 wird das Verdrehen des Bedienrads 60 begrenzt. Hierzu können Endanschläge 76 des Bedienrads an der Anschlagfläche 48 und einer auf der gegenüberliegenden Seite befindlichen Anschlagfläche 48 in Anlage kommen. Der Lagerzapfen 42 weist eine Lauffläche 44 für das Bedienrad 60 und einen Abschnitt 46 auf. Der Abschnitt 46 ist konisch ausgeführt. Im montierten Zustand des Bedienrads 60 steht das Bedienrad 60 mit seiner Innenwand nur über die Lauffläche 44 in Kontakt mit dem Lagerzapfen 42. Es erfolgt daher keine Anlage an direkt dem Lagerzapfen 42 sich anschließenden Flächen, wie dies im Stand der Technik bekannt ist. Insbesondere kann das Bedienrad 60 nicht an Wandabschnitten im Bereich des Lagerzapfens 42, die sich parallel zur Seitenwand 18 erstrecken, "schleifen". Über das Lager 50 wird eine Begrenzung in Y-Richtung abseits der Lagerung in X- und Z-Richtung über den Lagerzapfen 42 erreicht. Das Lager 50 und Haltearme 26 (siehe Fig. 10) verhindern ein Anliegen des Bedienrads 60 an diesen Wandabschnitten.

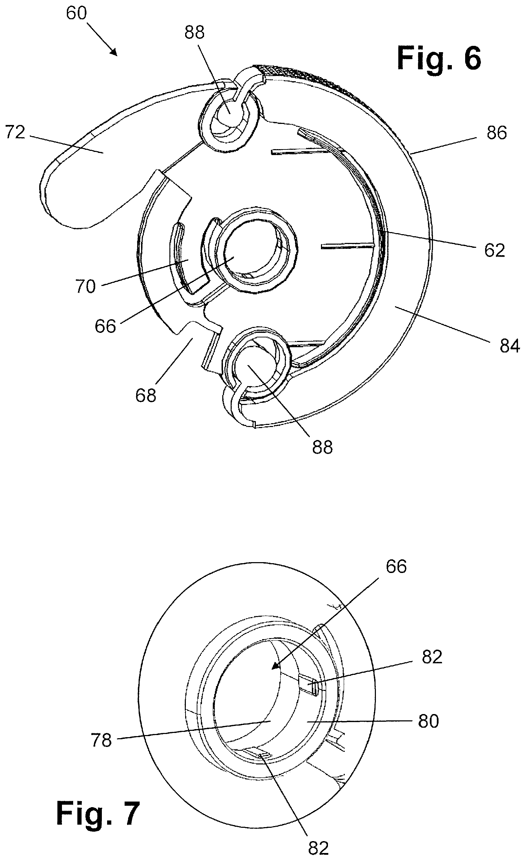

Fig. 4 zeigt eine schematische Seitenansicht des Bedienrads 60. Das Bedienrad 60 weist eine Lageröffnung 66 auf. Über die Lageröffnung 66 ist das Bedienrad 60 drehbar auf dem Lagerzapfen 42 gelagert. Zusätzlich weist das Bedienrad 60 Aufnahmeöffnungen 64 auf. Über die Aufnahmeöffnungen 64 werden Halteelemente 88 einer Dekorleiste 86 aufgenommen (siehe hierzu Fig. 6). Zusätzlich weist das Bedienrad 60 einen Ausschnitt 68 auf. Der Ausschnitt 68 dient zur Montage des Bedienrads 60 auf den Lagerzapfen 42. Hierzu wird das Bedienrad 60 so auf den Lagerzapfen 42 aufgesetzt, dass der Ausschnitt 68 sich im Bereich des Lagers 50 findet. Nach dem Aufsetzen des Bedienrads 60 wird dieses gegen den Uhrzeigersinn soweit verdreht, bis die Anschlagfläche 48 zwischen den beiden Endanschlägen 76 des Bedienrads 60 aufgenommen ist. Um dies zu erreichen, weist das Bedienrad 60 einen Arm 70 auf, der ein Federn des unteren Endanschlags 76 bei der Montage erlaubt (siehe hierzu Fig. 5).

Fig. 5 zeigt eine weitere schematische Seitenansicht des Bedienrads 60. Das Bedienrad 60 weist auf beiden Seiten ein Gleitringelement 62 auf. Das Gleitringelement 62 liegt im eingesetzten und zusammengebauten Zustand der Lagereinrichtung 40 an Anlageflächen 29 von Haltearmen 26 der Blende 20 an. Zusätzlich weist das Bedienrad 60 einen Arm 72 auf, an dem die Lagerkugel 74 angeordnet ist.

Fig. 6 zeigt eine perspektivische Darstellung des Bedienrads 60. In der Darstellung von Fig. 6 sind zusätzlich eine Chromspange 84 und eine Dekorleiste 86 für das Bedienrad 60 dargestellt. Im zusammengebauten Zustand des Luftausströmers 10 ist in der Regel nur die Dekorleiste 86 über eine Öffnung 24 der Blende 20 sichtbar. Es kann auch ein Teil der Chromspange 84 sichtbar sein. Der restliche Teil des Bedienrads 60 ist hinter der Blende 20 angeordnet und daher im eigebauten Zustand nicht sichtbar. Der in den Fig. 4 und 5 gezeigte Bestandteil des Bedienrads 60 besteht beispielsweise aus Kunststoff und wird in einem Spritzgussprozess hergestellt.

Fig. 7 zeigt eine vergrößerte perspektivische Darstellung der Lageröffnung 66 des Bedienrads 60. Die Lageröffnung weist an der Innenwand zwei Abschnitte 78 und 80 auf. Die beiden Abschnitte 78 und 80 verkleinern jeweils ausgehend vom äußeren Rand den Durchmesser der Lageröffnung 66 und weisen zueinander einen stumpfen Winkel auf. Im Abschnitt 80 befinden sich vier um 90° angeordnete Lagerflächen 82, die beispielsweise als Erhebung ausgebildet sind. Im montierten Zustand des Bedienrads 60 liegt dieses nur über die Lagerflächen 82 auf der Lauffläche 44 des Lagerzapfens 42 auf.

Fig. 8 zeigt eine perspektivische Darstellung der Blende 20 der Lagereinrichtung 40 mit eingesetzter Feder 30. Die Blende 20 weist an ihrer Rückseite 25 vier Haltearme 26 auf, die sich gegenüberliegend zur Öffnung 24 erstrecken. Die Öffnung 24 ist die Bedienradöffnung, über welche ein Abschnitt des Bedienrads 60 herausragt. Die Befestigungszunge 28 dient zur Befestigung am Gehäuse 12. Zwischen den Haltearmen 26 auf der rechten Seite von Fig. 8 ist ein Halteelement 27 angeordnet. Das Halteelement 27 ist für die Feder 30 vorgesehen.

Im montierten Zustand liegen die Gleitringelemente 62 des Bedienrads 60 an den Anlageflächen 29 der Haltearme 26 an. Die Haltearme 26 definieren damit die Position des Bedienrads im montierten Zustand und verhindern zudem eine Bewegung in Y-Richtung. Da die Lagerung des Bedienrads 60 direkt an der Blende 20 erfolgt, kann auch eine definierte Spaltbildung zwischen der Öffnung 24 und dem Bedienrad 60 erreicht werden. Im Stand der Technik wurde bisher die Ausrichtung und Lagerung des Bedienrads direkt am Lagerzapfen am Gehäuse durchgeführt. Aufgrund von Toleranzen und einer erforderlichen Beweglichkeit des Bedienrads kam es dann zu einem Anschlagen des Bedienrads an Kanten der Öffnung und zu ungleichmäßigen Spaltbildern.

Durch die hierin beschriebene Ausführung mit einer Lagerstelle über die Haltearme 26 direkt an der Blende 20, über welche das Bedienrad über die Öffnung 24 hinausragt, werden ungleichmäßige Spaltbilder und ein Anschlagen verhindert.

Fig. 9 zeigt eine schematische Draufsicht auf die Seitenwand 18 und die Blende 20. Die Blende 20 wird bei der Montage über die Haltezunge 28 und weitere Rastelemente an weiteren Bereichen der Blende 20 mit dem Gehäuse 12 und mit der Seitenwand 18 verbunden. Bevor die Blende 20 mit dem Gehäuse 12 verbunden wird, wird jedoch erst das Bedienrad 60 auf den Lagerzapfen 42 in der vorstehend beschriebenen Weise aufgebracht.

Fig. 10 zeigt eine schematische Draufsicht auf die Seitenwand 18, die Blende 20 und das Bedienrad 60. Die Gleitringelemente 62 liegen direkt an den Anlageflächen 29 der Haltearme 26 an. Ein Verkippen des Bedienrads 60 wird zusätzlich über das Lager 50 verhindert. Zudem nimmt das Bedienrad 60 eine definierte Position in Bezug zu der Blende 20 und damit zu der Öffnung 24 ein.

Fig. 11 zeigt eine schematische Draufsicht auf die Seitenwand 18, das Bedienrad 60 und die Feder 30. Die Blende 20 ist in dieser Darstellung aus Gründen der Übersichtlichkeit nicht gezeigt. Über die Haltearme 26 wird das Bedienrad 60 in Position gehalten.

Über die Feder 30 wird ein Druck auf das Bedienrad 60 ausgeübt, sodass das erforderliche Moment zum Verdrehen des Bedienrads 60 um die Rotationsachse R einstellbar ist. Die Feder 30 weist einen Abschnitt 32 auf, der gegen einen Wandbereich des Bedienrads 60 drückt. Der Abschnitt 32 kann insbesondere auf eines der Gleitringelemente 62 einen Druck ausüben. Die Feder 30 weist zudem Bügel 34 auf, die auf das Halteelement 27 einen Druck ausüben und über entsprechende Öffnungen verrastet sind. Die Position der Feder 30 ist damit vorgegeben.

Zur Einstellung einer Bedienkraft kann die Feder 30 auch durch andere Federn ersetzt werden. Durch die außermittige Einwirkung der Feder 30 auf das Bedienrad 60 kann die Feder 30 weicher und geometrisch großzügiger ausgeführt werden, was eine verbesserte Bedienkraft bereitstellt. Es kommt daher auch nicht zu einem Verkanten oder zu hochgradigen Bewegungen.

Das Bedienrad 60 kann somit ohne Überbestimmung direkt an der Blende 20 in der Weise bestimmt werden, dass ein möglichst minimaler und gleichmäßiger Spalt zwischen dem Bedienrad 60 und der Öffnung 24 in der Blende 20 realisiert wird. Mit Hilfe der Feder 30, die für den Toleranzausgleich sorgt, kann gleichzeitig die Bedienkraft direkt dort eingestellt werden, wo diese für einen Anwender von Bedeutung ist.

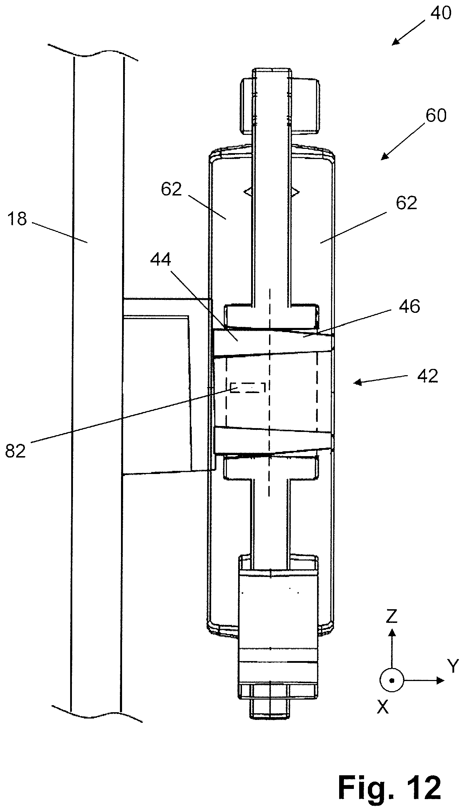

Fig. 12 zeigt eine schematische Schnittansicht durch die Lagerstelle an der Seitenwand 18 und das Bedienrad 60. Die Darstellung zeigt schematisch die leichte Querschnittsverringerung im mittleren Bereich der Lageröffnung 66 des Bedienrads 60 durch die unter einem stumpfen Winkel zulaufenden Abschnitte 78 und 80.

Aufgrund der Ausbildung des Lagerzapfens 42 und der Lageröffnung 66 des Bedienrads 60 würde es ohne die Lagerung und Anlage des Bedienrads 60 über die Gleitringelemente 62 und die Haltearme 26 zu einem Verkippen des Bedienrads 60 kommen.

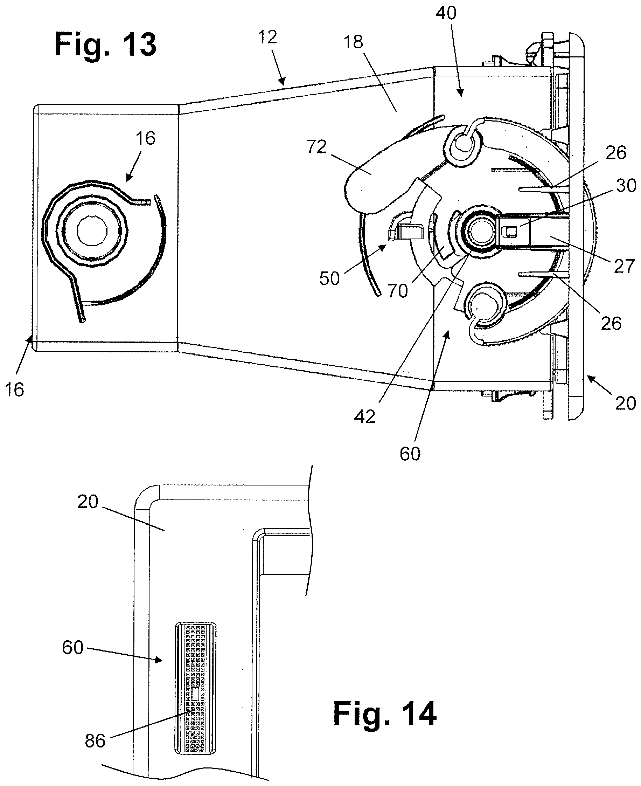

Fig. 13 zeigt eine schematische Seitenansicht des Luftausströmers 10 mit dem Gehäuse 12 und der Lagereinrichtung 40. Die Darstellung verdeutlicht wie ein Zusammenbau der Komponenten erfolgt, wobei zuerst das Bedienrad derart auf den Lagerzapfen 42 aufgesetzt werden muss, dass der Ausschnitt 68 sich im Bereich des Lagers 50 befindet. Erst anschließend kann das Bedienrad 60 gegen den Uhrzeigersinn verdreht werden, wobei ein Endanschlag 76 über den gefederten Arm 70 ein Überfahren der Anschlagfläche 48 für die fertige Gebrauchsposition erlaubt. Nach dem Aufsetzen des Bedienrads 60 wird die Blende 20 mit dem Gehäuse 12 verbunden. Dabei gelangen die Gleitringelemente 62 in Anlage mit den Anlageflächen 29 der Haltearme 26. Über entsprechende Rastelemente am Gehäuse 12 und an der Blende 20 wird die Verbindung verrastet. Anschließend ist das Bedienrad 60 sicher zwischen den Haltearmen 26 geführt, wobei über die Feder 30 ein Toleranzausgleich bereitgestellt wird. Weiterhin ermöglicht die Feder 30 eine definierte Bedienkraft zum Drehen des Bedienrads 60 bereitzustellen.

Fig. 14 zeigt eine schematische Darstellung eines Bereichs der Blende 20 und des Bedienrads 60, wobei ein gleichmäßiges Spaltbild aufgrund der vorstehend beschriebenen Ausführung und Anordnung erreicht wird. Das gleichmäßige Spaltbild resultiert insbesondere durch die Lagerung des Bedienrads 60 direkt an der Blende 20 abseits der Lagerstelle für eine Bestimmung in den Raumrichtungen in X- und Z-Richtung. Abweichungen durch Toleranzen können durch die Feder 30 eliminiert werden, welche das Bedienrad 26 gegen die Haltearme 26 drückt.

### Bezugszeichenliste

- 10: Luftausströmer
- 12: Gehäuse
- 14: Anschluss
- 16: Lager
- 18: Seitenwand
- 19: Lageröffnung
- 20: Blende
- 21: Vorderseite
- 22: Ausströmöffnung
- 23: Rahmen
- 24: Öffnung
- 25: Rückseite
- 26: Haltearm
- 27: Halteelement
- 28: Befestigungszunge
- 29: Anlagefläche
- 30: Feder
- 32: Abschnitt
- 34: Bügel
- 40: Lagereinrichtung
- 42: Lagerzapfen
- 44: Lauffläche
- 46: Abschnitt
- 48: Anschlagfläche
- 50: Lager
- 52: Anlagefläche
- 60: Bedienrad
- 62: Gleitringelement
- 64: Aufnahmeöffnung
- 66: Lageröffnung
- 68: Ausschnitt
- 70: Arm
- 72: Arm
- 74: Lagerkugel
- 76: Endanschlag
- 78: Abschnitt
- 80: Abschnitt
- 82: Lagerfläche
- 84: Chromspange
- 86: Dekorleiste
- 88: Halteelement

- R: Rotationsachse

## Patentansprüche

1. Lagereinrichtung (40) mit einem Bedienrad (60), aufweisend einen Wandabschnitt (18) mit einem Lagerzapfen (42), eine Blende (20), die an dem Wandabschnitt (18) angeordnet ist, und ein Bedienrad (60), welches über den Lagerzapfen (42) drehbar gelagert ist und abschnittsweise über eine Öffnung (24) in der Blende (20) herausragt, **dadurch gekennzeichnet, dass**
- der Wandabschnitt (18) ein Lager (50) aufweist, welches beabstandet zum Lagerzapfen (42), der Blende (20) abgewandt, angeordnet ist,
- das Lager (50) einer Verlagerung des Bedienrads (60) parallel zur Rotationsachse (R) des Bedienrads (60) in mindestens einer Richtung entgegenwirkt, und
- an der Blende (20) eine Federeinrichtung (30) angeordnet ist, welche das Bedienrad (60) gegen einen Anlagebereich der Blende (20) drückt.

2. Lagereinrichtung nach Anspruch 1, wobei der Anlagebereich zwei von der Blende (20) abstehende Haltearme (26) aufweist, die sich ausgehend von der Öffnung (24) der Blende (20) in Richtung des Bedienrads (60) erstrecken, und Anlageflächen (29) für das Bedienrad (60) aufweisen, wobei die Haltearme (26) sich auf der dem Wandabschnitt (18) zugewandten Seite der Blende (20) befinden.

3. Lagereinrichtung nach Anspruch 2, wobei auf der gegenüberliegenden Seite der Öffnung (24) der Blende (20) zwei weitere Haltearme (26) angeordnet sind, welche Anlageflächen (29) für das Bedienrad (60) aufweisen, wobei das Bedienrad (60) zwischen den Paaren von Haltearmen (26) aufgenommen ist.

4. Lagereinrichtung nach Anspruch 2 oder 3, wobei das Bedienrad (60) mindestens ein Gleitringelement (62) aufweist, welches sich abschnittsweise radial zur Rotationsachse (R) des Bedienrads (60) um das Bedienrad (60) erstreckt und im Bereich der Anlageflächen (29) der Haltearme (26) angeordnet ist.

5. Lagereinrichtung nach Anspruch 4, wobei das mindestens eine Gleitringelement (62) eine reibungsreduzierende oder reibungserhöhende Beschichtung aufweist.

6. Lagereinrichtung nach einem der Ansprüche 1 bis 5, wobei die Federeinrichtung (30) derart ausgebildet und angeordnet ist, dass diese beabstandet zum Lagerzapfen (42) einen Druck auf das Bedienrad (60) ausübt.

7. Lagereinrichtung nach einem der Ansprüche 1 bis 6, wobei das Bedienrad (60) eine Lageröffnung (66) aufweist, über welche das Bedienrad (60) auf dem Lagerzapfen (42) drehbar gelagert ist, wobei die Lageröffnung (66) an der Innenwand vier um 90° versetzt angeordnete Lagerflächen (82) aufweist.

8. Lagereinrichtung nach einem der Ansprüche 1 bis 7, wobei das Bedienrad (60) Endanschläge (76) zur Begrenzung der Rotation des Bedienrads (60) und der Wandabschnitt (18) Anschlagflächen (48) für die Endanschläge (76) aufweist.

9. Lagereinrichtung nach Anspruch 8, wobei ein Endanschlag (76) federnd ausgeführt ist.

10. Luftausströmer mit einer Lagereinrichtung nach einem der Ansprüche 1 bis 9, wobei der Wandabschnitt (18) Teil des Gehäuses (12) des Luftausströmers (10) und das Bedienrad (60) über eine Hebel- oder Zahnradanordnung mit einer Schließklappeneinrichtung zur Regelung der zugeführten Luftmenge gekoppelt ist.

## Claims

1. Mounting device (40) with a control wheel (60), comprising
a wall section (18) with a bearing pin (42),
a frame (20) arranged at the wall section (18) and
a control wheel (60) which is rotatably mounted by way of the bearing pin (42) and which projects, in a section, beyond an opening (24) in the frame (20),
**characterised in that**
- the wall section (18) comprises a mount (50) arranged at a spacing from the bearing pin (42), which faces away from the frame (20),
- the mount (50) counteracts displacement, in at least one direction, of the control wheel (60) parallel to the axis (R) of rotation of the control wheel (60) and
- a spring device (30) urging the control wheel (60) towards a contact region of the frame (20) is arranged at the frame (20).

2. Mounting device according to claim 1, wherein the contact region has two retaining arms (26) which protrude from the frame (20) and which extend from the opening (24) of the frame (20) in the direction of the control wheel 960) and which have contact surfaces (29) for the control wheel (60), wherein the retaining arms (26) are disposed on the side of the frame (20) towards the wall section (18).

3. Mounting device according to claim 2, wherein two further retaining arms (26) having contact surfaces (29) for the control wheel (60) are arranged on the opposite side of the opening (24) of the frame (20), wherein the control wheel (60) is received between the pairs of retaining arms (26).

4. Mounting device according to claim 2 or 3, wherein the control wheel (60) has at least one slide ring element (62) which extends, in a section, around the control wheel (60) radially with respect to the axis (R) of rotation of the control wheel (60) and is arranged in the region of the contact surfaces (29) of the retaining arms (26).

5. Mounting device according to claim 4, wherein the at least one slide ring element (62) has a friction-reducing or friction-increasing coating.

6. Mounting device according to any one of claims 1 to 5, wherein the spring device (30) is so constructed and arranged that this exerts a pressure on the control wheel (60) at a spacing from the bearing pin (42).

7. Mounting device according to any one of claims 1 to 6, wherein the control wheel (60) has a mounting opening (66) by way of which the control wheel (60) is rotatably mounted on the bearing pin (42), wherein the mounting opening (66) has at the inner wall four mounting surfaces (82) arranged to be offset by 90°.

8. Mounting device according to any one of claims 1 to 7, wherein the control wheel (60) has end abutments (76) for limitation of the rotation of the control wheel (60) and the wall section (18) has abutment surfaces (48) for the end abutments (76).

9. Mounting device according to claim 8, wherein an end abutment (76) is of resilient construction.

10. Air vent with a mounting device according to any one of claims 1 to 9, wherein the wall section (18) is part of the housing (12) of the air vent (10) and the control wheel (60) is coupled by way of a lever arrangement or gearwheel arrangement with a closure flap device for regulation of the supplied amount of air.

## Revendications

1. Dispositif de palier (40) avec une roue de commande (60), présentant une section de paroi (18) avec un tourillon (42), un obturateur (20) qui est agencé au niveau de la section de paroi (18), et une roue de commande (60) qui est logée de manière à pouvoir tourner par le biais du tourillon (42) et dépasse par sections d'une ouverture (24) dans l'obturateur (20), **caractérisé en ce que**
- la section de paroi (18) présente un palier (50) qui est agencé à distance du tourillon (42) en face de l'obturateur (20),
- le palier (50) agit contre un déplacement de la roue de commande (60) parallèlement à l'axe de rotation (R) de la roue de commande (60) dans au moins une direction, et
- au niveau de l'obturateur (20) est agencé un dispositif de ressort (30) qui presse la roue de commande (60) contre une zone d'appui de l'obturateur (20).

2. Dispositif de palier selon la revendication 1, dans lequel la zone d'appui présente deux bras de retenue (26) dépassant de l'obturateur (20), qui s'étendent à partir de l'ouverture (24) de l'obturateur (20) en direction de la roue de commande (60), et présentent des surfaces d'appui (29) pour la roue de commande (60), dans lequel les bras de retenue (26) se trouvent sur le côté tourné vers la section de paroi (18) de l'obturateur (20).

3. Dispositif de palier selon la revendication 2, dans lequel sur le côté opposé de l'ouverture (24) de l'obturateur (20), deux autres bras de retenue (26) sont agencés, lesquels présentent des surfaces d'appui (29) pour la roue de commande (60), dans lequel la roue de commande (60) est reçue entre les paires de bras de retenue (26).

4. Dispositif de palier selon la revendication 2 ou 3, dans lequel la roue de commande (60) présente au moins un élément annulaire coulissant (62) qui s'étend par sections radialement par rapport à l'axe de rotation (R) de la roue de commande (60) autour de la roue de commande (60) et est agencé dans la zone des surfaces d'appui (29) des bras de retenue (26).

5. Dispositif de palier selon la revendication 4, dans lequel l'au moins un élément annulaire coulissant (62) présente un revêtement augmentant la friction ou réduisant la friction.

6. Dispositif de palier selon l'une des revendications 1 à 5, dans lequel le dispositif de ressort (30) est réalisé et agencé de telle manière que celui-ci exerce à distance du tourillon (42) une pression sur la roue de commande (60).

7. Dispositif de palier selon l'une des revendications 1 à 6, dans lequel la roue de commande (60) présente une ouverture de palier (66) par le biais de laquelle la roue de commande (60) est logée de manière à pouvoir tourner sur le tourillon (42), dans lequel l'ouverture de palier (66) présente quatre surfaces de palier (82) agencées décalées de 90° au niveau de la paroi intérieure.

8. Dispositif de palier selon l'une des revendications 1 à 7, dans lequel la roue de commande (60) présente des butées d'extrémité (76) pour la délimitation de la rotation de la roue de commande (60) et la section de paroi (18) présente des surfaces de butée (48) pour les butées d'extrémité (76).

9. Dispositif de palier selon la revendication 8, dans lequel une butée d'extrémité (76) est réalisée de manière élastique.

10. Aérateur avec un dispositif de palier selon l'une des revendications 1 à 9, dans lequel la section de paroi (18) fait partie du boîtier (12) de l'aérateur (10) et la roue de commande (60) est accouplée par le biais d'un agencement de levier ou roue dentée à un dispositif de clapet de fermeture pour la régulation de la quantité d'air amenée.
